# EUROPÄISCHE PATENTANMELDUNG

(11) **EP 0 892 532 A2**
(43) Veröffentlichungstag der Anmeldung: **20.01.1999**
(21) Anmeldenummer: 98110431.8
(22) Anmeldetag: 08.06.1998
(51) Int. Cl.: H04M 1/00, H04M 3/42

(54) **Telekommunikationsnetz mit Endeinrichtungen**

(30) Priorität: 14.07.1997 DE 19730029
(71) Anmelder: Deutsche Telekom AG, 53113 Bonn (DE)
(72) Erfinder: Breuckmann, Günter, Dipl.-Ing., 64331 Weiterstadt (DE)

(57) **Zusammenfassung**

Es wird ein Verfahren zur Statusabfrage durch Endeinrichtungen und Statusübermittlung an Endeinrichtungen, die sich an einem Anschluß eines Telekommunikationsnetzes befinden, beschrieben. Dabei stellt die jeweilige Vermittlungsstelle den Endeinrichtungen gespeicherte Statusinformationen entweder automatisch oder auf Abruf zur Verfügung. Durch Erweiterung oder Ergänzung der bestehenden Protokolle auf den Übertragungsstrecken zwischen der Vermittlungsstelle und den Endeinrichtungen entsprechend den jeweiligen Anschlußtypen, erfolgt die Erweiterung der Funktionalität. Das Protokoll zur Übertragung der Statusinformation erkennt Übertragungsfehler und beseitigt diese während der Übertragung automatisch. Die Endeinrichtung erhält Statusinformationen von der Vermittlungsstelle, die zur Parametrisierung der Endeinrichtung verwendet werden, an der Endeinrichtung angezeigt und selektiert werden und in der Endeinrichtung gespeichert werden. Der Abruf und die Auswertung der Statusinformation durch die Endeinrichtung erfolgt automatisch und wird zur automatischen Parametrisierung der Endeinrichtung verwendet.

## Beschreibung

Die Erfindung betrifft ein Verfahren zur Steuerung von Statusabfragen und -übermittlungen in einem Telekommunikationsnetz mit daran angeschalteten Endeinrichtungen, die galvanisch, optoelektronisch oder mittels Funk mit einer Vermittlungsstelle des Telekommunikationsnetz direkt oder indirekt verbunden sind.

Bisher vermittelt eine Vermittlungsstelle eines Telekommunikationsnetzes nicht den Status eines Anschlusses, an das die jeweilige Endeinrichtung angeschlossen ist. Unter dem Begriff Endeinrichtung fallen jede Art von Telefonen, wie drahtgebundene Telefone, schnurlose Telefone, Mobiltelefone und auch andere Endgeräte, wie Fernkopierer, Anrufbeantworter, Computer, Terminals und deren Kombination. Als Endeinrichtungen werden im vorliegenden Fall auch Telekommunikationsanlagen, Telefonanlagen und Nebenstellenanlagen einschließlich der daran betriebenen Telefone und Endgeräte betrachtet.

Von der Endeinrichtung bzw. vom Benutzer bzw. Betreiber der Endeinrichtung kann beim heutigen Stand der Technik nicht automatisch oder auf Initiative des Benutzers bzw. des Betreibers eine Auswertung dahingehend erfolgen, welche Leistungsmerkmale am Anschluß der Endeinrichtung genutzt werden können. Bei der erstmaligen Inbetriebnahme oder bei der Wiederaufnahme des Betriebs einer Endeinrichtung, zum Beispiel nach einer Störung, ist es bisher nicht möglich, die dem jeweiligen Anschluß zugeordnete Rufnummer automatisch oder auf Initiative des Benutzers bzw. Betreibers der Endeinrichtung durch die Endeinrichtung von der Vermittlungsstelle abzufragen und in der Endeinrichtung auszuwerten bzw. dem Benutzer oder Betreiber der Endeinrichtung zur weiteren Verarbeitung zur Verfügung zu stellen. Die Parameter, wie Rufnummer und Grundeinstellungen zu Leistungsmerkmalen müssen bisher vom Benutzer oder Betreiber in die Endeinrichtung von Hand eingegeben werden.

Der Erfindung liegt deshalb die Aufgabe zugrunde, ein Verfahren zur automatischen Statusabfrage durch Endeinrichtungen und zur automatischen Statusübermittlung an Endeinrichtungen in einem Telekommunikationsnetz zu schaffen, wobei die Vermittlungsstelle den angeschlossenen Endeinrichtungen automatisch Statusinformationen Zur Verfügung stellen soll.

Die erfindungsgemäße Lösung der Aufgabe ist im Kennzeichen des Patentanspruchs 1 charakterisiert.

Weitere Merkmale der Erfindung bzw. Ausgestaltungen der Erfindung sind in den Kennzeichen der Patentansprüche 2 bis 5 charakterisiert.

Durch eine Erweiterung oder Ergänzung der bestehenden Protokolle auf den Übertragungsstrecken zwischen Vermittlungsstelle und Endeinrichtung entsprechend den jeweiligen Anschlußtypen wird die Statusabfrage durch Endeinrichtungen und die Statusübermittlung an Endeinrichtungen automatisch vollzogen. Das Protokoll zur Übertragung der Statusinformation erkennt Übertragungsfehler und beseitigt diese außerdem während der Übertragung automatisch. Dies erfolgt im wesentlichen dadurch, daß die jeweilige Endeinrichtung Statusinformationen von der Vermittlungsstelle erhält, die zur Parametrisierung der Endeinrichtung benötigt werden, an der jeweiligen Endeinrichtung angezeigt, selektiert und gespeichert werden.

Bei der ersten oder wiederholten Inbetriebnahme einer Endeinrichtung muß bisher insbesondere bei digitalen Anschlüssen die Rufnummer des Anschlusses als Parameter in die Endeinrichtung durch den Benutzer oder Betreiber eingegeben werden. Die manuelle Eingabe erfordert Zeit und birgt die Gefahr in sich, daß Fehler bei der Eingabe vom Bediener gemacht werden. Durch die vorliegende Erfindung wird ein automatischer Abruf der Statusinformation von der Vermittlungsstelle erreicht, wodurch die Eingabefehler vermieden werden und außerdem noch Zeit eingespart wird. Außerdem wird es einem technischen Laien dadurch ermöglicht, Endeinrichtungen an ein Telekommunikationsnetz anzuschließen und ohne Aufwand in Betrieb zu nehmen. Erfolgt im Rahmen der Parametrisierung eine Freigabe von Leistungsmerkmalen, so werden hier auch mögliche Fehler vermieden, da der Benutzer bzw. Betreiber nur auf die Merkmale zurückgreifen kann, die freigeschaltet sind.

Die Erfindung wird nun anhand eines Ausführungsbeispiels näher erklärt.

Der Status, der durch die Vermittlungsstelle eines Telekommunikationsnetzes einer Endeinrichtung übermittelt wird, kann folgende Informationen enthalten:
- Datum und Uhrzeit der Statusübermittlung
- Typ bzw. Art des Anschlusses und Protokoll am Anschluß
- bei Endgeräten Rufnummer des Anschlusses mit Landeskennzahl, Ortskennzahl, Dienstzugangskennziffern, zum Beispiel 0171 für ein Mobilfunknetz
- bei Nebenstellenanlagen bzw. Telefonnanlagen, die Rufnummernblöcke
- eine Liste mit den am Anschluß verfügbaren Leistungsmerkmalen
- den Status der einzelnen verfügbaren Leistungsmerkmale und Parameter, mit denen die Leistungsmerkmale vorbelegt sind und
- Tariftyp, Tarifierungsart, Tarifinformationen.

Die Statusinformation wird durch Initiative der Endeinrichtung bsw. des Benutzers oder Betreibers von der Vermittlungsstelle abgerufen und durch die Endeinrichtung ausgewertet bzw. dem Benutzer oder Betreiber zur weiteren Verarbeitung zur Verfügung gestellt. Dies kann zum Beispiel durch Drücken einer bestimmten Taste oder Tastenkombination erfolgen. Die Statusinformation wird außerdem durch die Endeinrichtung gespeichert, damit auch eine spätere Verwendung bzw. Bearbeitung der Statusinformation durch den Benutzer bzw. Betreiber möglich ist. Die Initiative der Statusabfrage kann auch automatisch erfolgen, wenn die Vermittlungsstelle oder die Steuerung des Telekommunikationsnetzes erkennt, daS eine Endeinrichtung erstmals angeschlossen oder wieder in Betrieb genommen wurde. Die Anfrage der Statusinformation kann jedoch auch durch Benutzereingabe, wie bereits kurz dargestellt, an der Endeinrichtung durch Tastendruck ausgelöst werden. Die Parametrisierung der Endeinrichtung erfolgt gemäß dem hier beschriebenen Verfahren automatisch. Es besteht auch die Möglichkeit, die automatisch übertragenen Statusinformationen nach Bearbeitung bsw. Bestätigung durch den Benutzer bzw. Betreiber als Parameter in der Endeinrichtung zu speichern. Die Statusübermittlung ermöglicht eine automatische Parametrisierung der Endeinrichtung. Leistungsmerkmale, die am Anschluß nicht zur Verfügung stehen, kann der Benutzer bzw. Betreiber von seiner Endeinrichtung nicht nutzen. Leistungsmerkmale, die am Anschluß verfügbar sind und im Rahmen der Parametrisierung in der Endeinrichtung freigegeben werden, können jedoch vom Benutzer bzw. Betreiber voll genutzt werden. Durch den automatischen Abruf der Statusinformation von der Vermittlungsstelle werden Eingabefehler vermieden und Zeit eingespart. Außerdem ist es jeder Bedienungsperson ohne technisches Fachwissen möglich, Endeinrichtungen an ein Telekommunikationsnetz anzuschließen und ohne weiteres in Betrieb zu nehmen. Erfolgt im Rahmen der Parametrisierung eine Freigabe von Leistungsmerkmalen, so werden hier außerdem auch Fehler vermieden, da der Benutzer bzw. Betreiber nur auf die Merkmale zurückgreifen kann, die freigeschaltet sind.

## Patentansprüche

1. Verfahren zur Steuerung von Statusabfragen und -übermittlungen in einem Telekommunikationsnetz mit daran angeschalteten Endeinrichtungen, die galvanisch, optoelektronisch oder mittels Funk mit einer Vermittlungsstelle des Telekommunikationsnetz direkt oder indirekt verbunden sind, dadurch gekennzeichnet,
daß die Endeinrichtung Statusinformationen softwaregesteuert, automatisch von der Vermittlungsstelle erhält, die zur Parametrisierung der Endeinrichtung benötigt werden und
daß die Statusinformationen an der Endeinrichtung angezeigt, selektiert und in der Endeinrichtung gespeichert werden.

2. Verfahren nach Patentanspruch 1, dadurch gekennzeichnet,
daß die bestehenden Protokolle auf den Übertragungsstrecken zwischen Vermittlungsstelle und Endeinrichtung dahingehend erweitert bzw. ergänzt werden, daß ein Protokoll zur Übertragung der Statusinformationen Übertragungsfehler automatisch erkennt und während der Übertragung automatisch beseitigt.

3. Verfahren nach einem der Patentansprüche 1 oder 2, dadurch gekennzeichnet,
daß der Abruf und die Auswertung der Statusinformation durch eine Endeinrichtung automatisch erfolgt und die Statusinformtion zur automatischen Parametrisierung der Endeinrichtung verwendet wird.

4. Verfahren nach einem der Patentansprüche 1 oder 2, dadurch gekennzeichnet,
daß die Statusinformationen von der Vermittlungsstelle eines Telekommunikationsnetzes durch Speicherung bereitgehalten werden und
daß die Übermittlung zu Endeinrichtungen, die an das Telekommunikationsnetz angeschlossen sind, auf Anforderung des Benutzers bzw. Betreibers oder im Rahmen der Parametrisierung bei Freigabe von neuen Leistungsmerkmalen automatisch erfolgt.

5. Verfahren nach einem der Patentansprüche 1 bis 4, dadurch gekennzeichnet,
daß die Statusinformation das Datum und die Uhrzeit der Statusübermittlung, den Typ bzw. die Art des Anschlusses und das Protokoll am Anschluß, bei Endgeräten Rufnummer des Anschlusses mit Landeskennzahl, Ortskennzahl, Dienstzugangskennziffern oder dergleichen, bei Nebenstellenanlagen bzw. Telefonanlagen die Rufnummernblöcke, eine Liste mit den am Anschluß verfügbaren Leistungsmerkmalen, dem Status der einzeln verfügbaren Leistungsmerkmale und Parameter, mit denen die Leistungsmerkmale vorbelegt sind, und den Tariftyp, die Tarifierungsart sowie Tarifinformationen enthält.
